# EUROPEAN PATENT APPLICATION

(11) **EP 4 668 539 A1**
(43) Date of publication of application: **24.12.2025**
(21) Application number: 25183694.6
(22) Date of filing: 18.06.2025
(51) Int. Cl.: H02J 9/00, H02J 7/00

(54) **POWER SUPPLY SWITCHING CIRCUIT AND POWER SUPPLY SWITCHING METHOD**

(30) Priority: 19.06.2024 TW 113122720
(71) Applicant: Coretronic Corporation, Hsin-Chu 300 (TW)
(72) Inventor: CHOU, Chen-Cheng, Hsin-Chu 300 (TW); LIAO, Jeng-An, Hsin-Chu 300 (TW)
(74) Representative: Ter Meer Steinmeister & Partner

(57) **Abstract**

Provided is a power supply switching circuit disposed in the projection device and including a universal serial bus (USB) port, a current limiting unit, a power converter, a detection circuit and a processing unit. When the projection device is in a powered-on state, the power converter provides a working voltage to the USB port through the current limiting unit to supply power. The detection circuit outputs a detection signal according to an electrical characteristic of an end of the current limiting unit. After the projection device is switched to a standby state, the processing unit receives a standby voltage, determines whether the USB port is in a power supply state based on the detection signal after a preset time, and controls the current limiting unit to be opened to stop power supply through the USB port in response to the USB port not being in the power supply state.

## Description

This application claims priority of Taiwan Patent Application Serial Number 113122720, filed on June 19, 2024.

### Technical Field

The present invention relates to a power supply switching circuit and a power supply switching method, in particular to a power supply switching circuit and a power supply switching method that can stop power supply through a universal serial bus (USB) port after an operation state of a projection device is switched to a standby state. Further it relates to a projection device comprising a power supply switching circuit.

### Related Art

The operation state of the projection device can comprise a powered-on state, a standby state, and a power-off state. When the existing projection device is in standby mode, it can support a power supply function via the USB port, a local area network (LAN) connection function, a Wi-Fi connection function, and a standby function for operating system (e.g., Android), and the overall power consumption is greater than 0.5 watts (W).

With the increasing importance of environmental protection issues and the regulations of relevant laws, energy conservation has become an urgent need. Therefore, how to adjust the overall power consumption of the projection device according to usage conditions while the operation state of the projection device keeps in a standby state has become an important development direction in the industry.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

Embodiments of the present invention provide a power supply switching circuit and a power supply switching method, which can adjust the overall power consumption of the projection device according to usage conditions when an operation state of a projection device is in a standby state to achieve energy saving effects.

Other objects and advantages of the present invention may be further understood from the technical features disclosed in the present invention.

The object is solved by the features of the independent claims. Preferred embodiments are given in the independent claims.

In order to achieve one or part or all of the above objectives or other objectives, an embodiment of the present invention provides a power supply switching circuit. The power supply switching circuit is disposed in a projection device and includes a USB port, a current limiting unit, a power converter, a detection circuit and a processing unit. An input end of the current limiting unit is connected to the power converter, and an output end of the current limiting unit is connected to the USB port. The detection circuit is connected to the input end or the output end of the current limiting unit. The processing unit is connected to the detection circuit and the current limiting unit. The power converter is configured to provide a working voltage to the USB port through the current limiting unit to supply power when the projection device is in a powered-on state. The detection circuit is configured to output a detection signal according to an electrical characteristic of the input end or the output end of the current limiting unit. The processing unit is configured to receive a standby voltage after the projection device is switched from the powered-on state to a standby state, determine whether the USB port is in a power supply state based on the detection signal after the processing unit receives the standby voltage and times for a first preset time, and control the current limiting unit to be opened in response to the USB port not being in the power supply state.

In order to achieve one or part of or all of the above objectives or other objectives, an embodiment of the present invention provides a power supply switching method. The power supply switching method is applied to a power supply switching circuit of a projection device. The power supply switching circuit includes a USB port, a current limiting unit, a power converter, a detection circuit and a processing unit. An input end of the current limiting unit is connected to the power converter, and an output end of the current limiting unit is connected to the USB port. The detection circuit is connected to the input end or output end of the current limiting unit, and the processing unit is connected to the detection circuit and the current limiting unit. The power supply switching method includes the following steps: providing a working voltage to the USB port through the current limiting unit to supply power when the projection device is in a powered-on state by the power converter; in response to the projection device being switched from the powered-on state to a standby state, receiving a standby voltage and timing a first preset time by the processing unit; after the first preset time, determining whether the USB port is in a power supply state based on a detection signal output by the detection circuit according to an electrical characteristic of the output end or the input end of the current limiting unit by the processing unit; and in response to determining that the USB port is not in the power supply state, controlling the current limiting unit to be opened by the processing unit.

In the following optional features are provided, which can be combined as a single feature or in combination with other optional features will be indicated.

In one or more embodiments, the electrical characteristic may comprise at least one of a voltage and a current.

In one or more embodiments, the processing unit may further determine whether the USB port is in the power supply state based on the detection signal output by the detection circuit again after the processing unit determines that the USB port is in the power supply state and times for a second preset time.

In one or more embodiments, the first preset time may be the same as or different from the second preset time.

In one or more embodiments, the detection circuit may be a voltage division circuit.

In one or more embodiments, one end of the voltage division circuit may be connected to the input end of the current limiting unit, the other end of the voltage division circuit may be grounded.

In one or more embodiments, a voltage division node of the voltage division circuit may be connected to the processing unit.

In one or more embodiments, the processing unit may be configured to determine whether the USB port is in the power supply state based on a voltage of the voltage division node, wherein the detection signal may be the voltage of the voltage division node.

In one or more embodiments, the power supply switching circuit may comprise a power management unit and a control unit.

In one or more embodiments, the power management unit may be connected to the processing unit.

In one or more embodiments, the control unit may be connected to the processing unit, the power management unit and the current limiting unit.

In one or more embodiments, in response to the USB port not being in the power supply state, the processing unit may be configured to enable the power management unit to supply power to the control unit, and control the current limiting unit to be opened through the control unit.

In one or more embodiments, the detection circuit may comprise a shunt resistor and a current sensing amplifier.

In one or more embodiments, one end of the shunt resistor may be connected to the output end of the current limiting unit, and the other end of the shunt resistor may be connected to the USB port.

In one or more embodiments, the current sensing amplifier may be connected in parallel with the shunt resistor.

In one or more embodiments, the current sensing amplifier may be configured to output a sensing voltage signal to the processing unit based on a current flowing through the shunt resistor, so that the processing unit may determine whether the USB port is in the power supply state based on the sensing voltage signal.

In one or more embodiments, the detection signal may be the sensing voltage signal.

In one or more embodiments, the detection circuit may comprise a magnetic field detector and a detection amplifier.

In one or more embodiments, the magnetic field detector may be connected to the output end of the current limiting unit and the USB port, and may measure a magnetic field.

In one or more embodiments, the detection amplifier may be connected in parallel with the magnetic field detector, and may output a measurement voltage signal to the processing unit based on a measurement result of the magnetic field detector, so that the processing unit may determine whether the USB port is in the power supply state based on the measurement voltage signal.

In one or more embodiments, the detection signal may be the measurement voltage signal.

In one or more embodiments, the magnetic field detector may be an iron core or a Hall element.

In one or more embodiments, the power supply switching method may comprise the following step in response to determining that the USB port is in the power supply state, determining whether the USB port is in the power supply state based on the detection signal output by the detection circuit after timing a second preset time by the processing unit.

In one or more embodiments, the detection circuit may be a voltage division circuit, one end of the voltage division circuit may be connected to the input end of the current limiting unit, and the other end of the voltage division circuit may be grounded, and a voltage division node of the voltage division circuit may be connected to the processing unit; the step of after the first preset time, determining, whether the USB port is in the power supply state based on the detection signal output by the detection circuit according to the electrical characteristic of the output end or the input end of the current limiting unit by the processing unit may comprise: after the first preset time, determining whether the USB port is in the power supply state based on a voltage of the voltage division node by the processing unit, wherein the detection signal is the voltage of the voltage division node.

In one or more embodiments, the power supply switching circuit may further comprise a power management unit and a control unit, the power management unit may be connected to the processing unit, and the control unit may be connected to the processing unit, the power management unit, and the current limiting unit; wherein the step of in response to determining that the USB port is not in the power supply state, controlling the current limiting unit to be opened by the processing unit may comprise: in response to determining that the USB port is not in the power supply state, enabling the power management unit to supply power to the control unit, and controlling the current limiting unit to be opened through the control unit by the processing unit.

In one or more embodiments, the detection circuit may comprise a shunt resistor and a current sensing amplifier, one end of the shunt resistor may be connected to the output end of the current limiting unit, the other end of the shunt resistor may be connected to the USB port, and the current sensing amplifier may be connected in parallel with the shunt resistor; the step of after the first preset time, determining whether the USB port is in the power supply state based on the detection signal output by the detection circuit according to the electrical characteristic of the output end or the input end of the current limiting unit by the processing unit may comprise after the first preset time, determining whether the USB port is in the power supply state based on a sensing voltage signal output by the current sensing amplifier according to a current flowing through the shunt resistor by the processing unit, wherein the detection signal is the sensing voltage signal.

In one or more embodiments, the detection circuit may comprise a magnetic field detector and a detection amplifier, the magnetic field detector may be connected to the output end of the current limiting unit and the USB port, and the detection amplifier may be connected in parallel with the magnetic field detector; the step of after the first preset time, determining whether the USB port is in the power supply state based on the detection signal output by the detection circuit according to the electrical characteristic of the output end or the input end of the current limiting unit by the processing unit may comprise: after the first preset time, determining whether the USB port is in the power supply state based on a measurement voltage signal output by the detection amplifier corresponding to a measurement result of a magnetic field measured by the magnetic field detector, by the processing unit, wherein the detection signal is the measurement voltage signal.

Based on the above, the embodiments of the present invention have at least one of the following advantages or efficacies. In the power supply switching circuit and power supply switching method of the present invention, when the operation state of the projection device is in the standby state and the first preset time has lapsed, the processing unit determines whether the USB port is in the power supply state based on the detection signal output by the detection circuit, and when the USB port is not in the power supply state, the processing unit controls the current limiting unit to be opened, thereby stopping the power supply through the USB port. Therefore, the power supply switching circuit and the power supply switching method of the embodiments of the present invention can control whether the projection device supports the power supply function via the USB port when the operation state of the projection device is in the standby state, enabling the projection device using the power supply switching circuit and the power supply switching method to control whether to continue supporting the power supply function according to usage conditions while in the standby state, thereby adjusting (reducing) the overall power consumption of the projection device during standby, and achieving energy-saving effects.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

FIG. 1 a block diagram of a power supply switching circuit of a first embodiment of the invention;
FIG. 2 is a flowchart of a power supply switching method of a first embodiment of the invention;
FIG. 3 a flowchart of a power supply switching method of a second embodiment of the invention;
FIG.4 a block diagram of a power supply switching circuit of a 2^{nd} embodiment of the invention;
FIG. 5 is a flowchart of a power supply switching method of a third embodiment of the invention;
FIG. 6 is a flowchart of a power supply switching method of a fourth embodiment of the invention;
FIG. 7 a block diagram of a power supply switching circuit of a third embodiment of the invention;
FIG. 8 is a flowchart of a power supply switching method of a fifth embodiment of the invention;
FIG. 9 is a flowchart of a power supply switching method of a sixth embodiment of the invention;
FIG.10 block diagram of a power supply switching circuit of a fourth embodiment of the invention;
FIG. 11 a flowchart of a power supply switching method of a seventh embodiment of the invention;
FIG. 12 a flowchart of a power supply switching method of an eighth embodiment of the invention;
FIG.13 a block diagram of a power supply switching circuit of a fifth embodiment of the invention;
FIG.14 is a flowchart of a power supply switching method of a ninth embodiment of the invention;
FIG. 15 is a flowchart of a power supply switching method of a tenth embodiment of the invention;
FIG.16 block diagram of a power supply switching circuit of a sixth embodiment of the invention;
FIG.17 a flowchart of a power supply switching method of an eleventh embodiment of the invention; and
FIG. 18 a flowchart of a power supply switching method of a twelfth embodiment of the invention.

### DETAILED DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

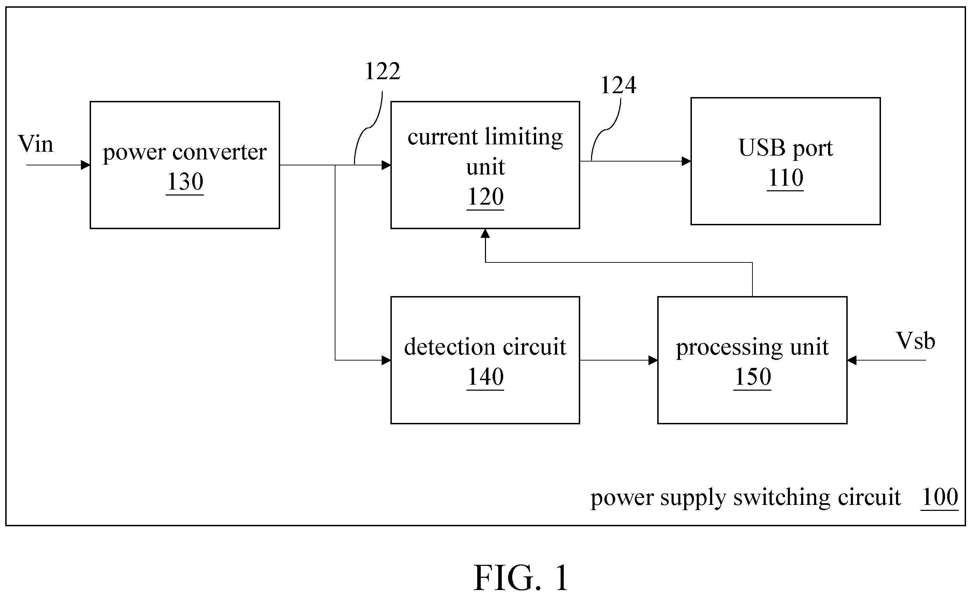

Please refer to FIG. 1, which is a block diagram of a power supply switching circuit according to a first embodiment of the present invention. As shown in FIG. 1, a power supply switching circuit 100 is disposed in a projection device (not shown) and comprises a universal serial bus (USB) port 110, a current limiting unit 120, a power converter 130, a detection circuit 140, and a processing unit 150. An input end 122 of the current limiting unit 120 is connected to the power converter 130, an output end 124 of the current limiting unit 120 is connected to the USB port 110, the detection circuit 140 is connected to the power converter 130 and to the input end 122 of the current limiting unit 120, and the processing unit 150 is connected to the detection circuit 140 and to the current limiting unit 120. The USB port 110 may be a Type-A USB port or a Type-C USB port. The current limiting unit 120 may be a switching element for overcurrent protection (e.g., a transistor, wherein the transistor may be an N-channel metal-oxide-semiconductor field-effect transistor or an NPN bipolar transistor). The power converter 130 may be a direct current-to-direct current (DC/DC) converter. The processing unit 150 may comprise a central processing unit (CPU), a microprocessor, a digital signal processor (DSP), a programmable controller, a programmable logic device (PLD), other similar devices, or a combination of these devices. The projection device may be, for example, a projector.

The power converter 130 is configured to provide a working voltage to the USB port 110 through the current limiting unit 120 for power supply when the projection device is in a powered-on state. Specifically, the power converter 130 may convert a DC voltage Vin (e.g., 12 volts) provided by the system (e.g., the motherboard of the projection device) into the working voltage (e.g., 5 volts), and provide the working voltage to the USB port 110 through the current limiting unit 120 to supply power. Therefore, when the projection device is in the powered-on state, it may supply power to an external electronic device via the USB port 110 for charging. The external electronic device may be, for example, a smartphone, a tablet computer, a computer of any form, a TV stick, or another electronic device.

The detection circuit 140 is configured to output a detection signal according to an electrical characteristic of the input end 122 of the current limiting unit 120. The electrical characteristic may comprise a voltage. In this embodiment, when the USB port 110 is not connected to the external electronic device, the detection circuit 140 may output a detection signal corresponding to the working voltage received at the input end 122 of the current limiting unit 120 and provided to the USB port 110. When an external electronic device is charged via the USB port 110 (the working voltage provided to the USB port 110 is drawn), the detection circuit 140 may output a detection signal according to a corresponding voltage drop generated synchronously at the input end 122 of the current limiting unit 120 (that is, at this time, the voltage at the input end 122 of the current limiting unit 120 is lower than the working voltage).

The processing unit 150 is configured to receive a standby voltage Vsb after the operation state of the projection device is switched from the powered-on state to a standby state, determine whether the USB port 110 is in a power supply state based on the detection signal after the processing unit 150 receives the standby voltage Vsb and times for a first preset time (e.g., 20 minutes), and control the current limiting unit 120 to be opened in response to the USB port 110 not being in the power supply state. Specifically, the user can control the projection device by pressing the power button of the projection device or operating the remote control of the projection device to switch the operation state of the projection device from the powered-on state to the standby state. When the projection device is in the standby state, the power supply (not shown) of the projection device can still provide the standby voltage Vsb to the processing unit 150 to maintain its operation, so the processing unit 150 can time for the first preset time after the projection device is switched from the powered-on state to the standby state. Since the projection device can support the power supply function via the USB port 110 when it is in the standby state, the power converter 130 can still provide the working voltage to the USB port 110 to supply power through the current limiting unit 120 at this time. After the expiration of the first preset time, the processing unit 150 determines whether the USB port 110 is in a power supply state based on whether a voltage drop occurs at the input end 122 of the current limiting unit 120 (that is, the processing unit 150 determines whether the USB port 110 is supplying power to an external electronic device). Then, when the processing unit 150 determines that the USB port 110 is not in the power supply state, it controls the current limiting unit 120 to be opened (that is, the switching element serving as the current limiting unit 120 is turned off), thereby stopping power supply through the USB port 110 and switching the operation state of the projection device from the standby state to an energy-saving state.

In this way, while the operation state of the projection device using the power supply switching circuit 100 is in the standby state, the power supply switching circuit 100 can control whether to continue supporting the power supply function via the USB port 110 according to usage conditions (that is, whether the USB port 110 is in the power supply state), so as to adjust (reduce) the overall power consumption of the projection device when it is in the standby state, thereby achieving energy-saving effects and enabling the projection device to comply with the standby power consumption requirements of the Energy-Related Products Directive (ErP Directive) 2023/826, published on April 17, 2023, by the European Commission.

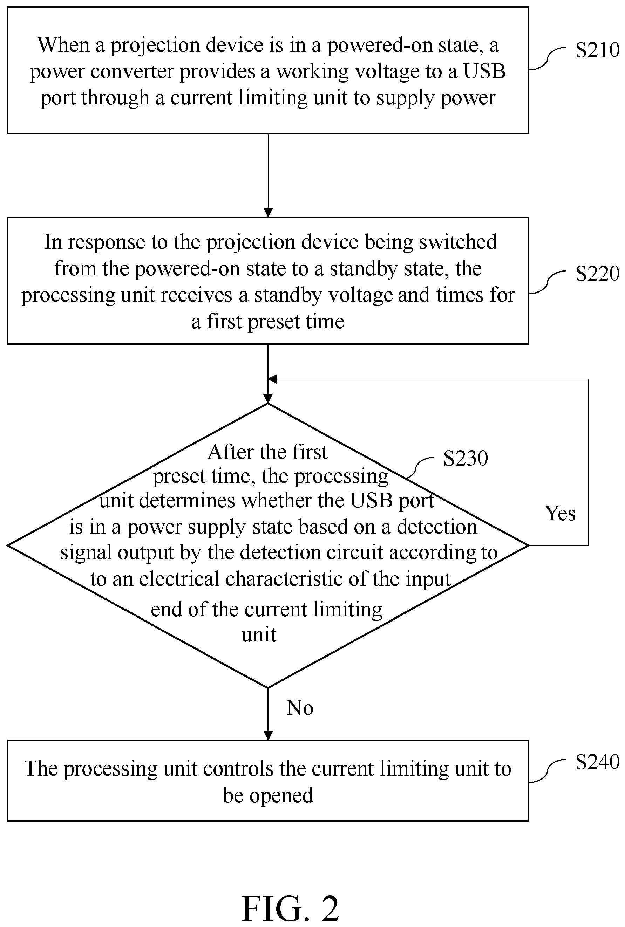

Please refer to FIG. 1 and FIG. 2 together. FIG. 2 is a flowchart of a power supply switching method according to a first embodiment of the present invention. The power supply switching method of FIG. 2 may be applied to the power supply switching circuit 100 of FIG. 1. In step S210, when the projection device is in a powered-on state, the power converter 130 provides a working voltage to the USB port 110 through the current limiting unit 120 to supply power. In step S220, in response to the projection device being switched from the powered-on state to a standby state, the processing unit 150 receives a standby voltage Vsb and times for a first preset time. In step S230, after the first preset time, the processing unit 150 determines whether the USB port 110 is in a power supply state based on a detection signal output by the detection circuit 140 according to an electrical characteristic of the input end 122 of the current limiting unit 120. In step S240, in response to determining that the USB port 110 is not in the power supply state, the processing unit 150 controls the current limiting unit 120 to be opened. In one embodiment, if the processing unit 150 determines that the USB port 110 is in the power supply state, step S230 is repeatedly executed. The implementation details of steps S210 to S240 can be found in the embodiment of FIG. 1 and will not be repeated here.

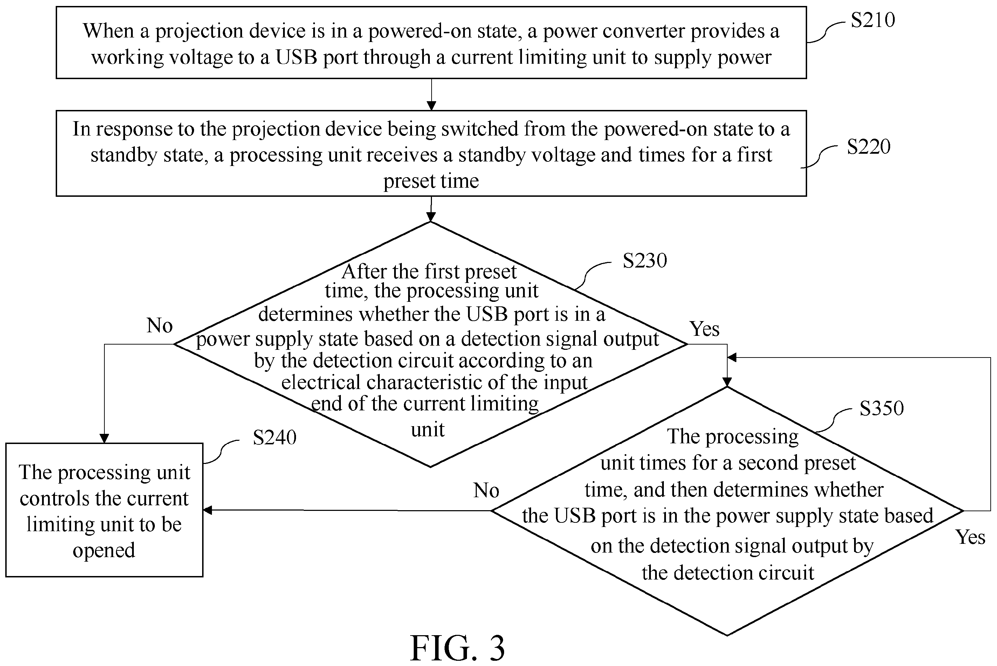

Please refer to FIG. 1 and FIG. 3 together. FIG. 3 is a flowchart of a power supply switching method according to a second embodiment of the present invention. The power supply switching method of FIG. 3 can be applied to the power supply switching circuit 100 of FIG. 1. The difference between the power supply switching method of FIG. 3 and the power supply switching method of FIG. 2 is that, in addition to steps S210 to S240, the power supply switching method of FIG. 3 may further comprise: in response to determining that the USB port 110 is in the power supply state, timing for a second preset time by the processing unit 150, and then determining whether the USB port 110 is in the power supply state based on the detection signal output by the detection circuit 140 (step S350). The first preset time may be the same as or different from the second preset time, and both may be set according to actual needs. In one embodiment, both the first preset time and the second preset time may be 20 minutes.

Specifically, when the processing unit 150 determines that the USB port 110 is in the power supply state after the expiration of the first preset time, the processing unit 150 times for the second preset time. After the expiration of the second preset time, the processing unit 150 again determines whether the USB port 110 is in the power supply state based on whether a voltage drop occurs at the input end 122 of the current limiting unit 120 (that is, the processing unit 150 determines whether the USB port 110 is supplying power to an external electronic device). If the processing unit 150 determines that the USB port 110 is in the power supply state, step S350 is repeatedly executed. If the processing unit 150 determines that the USB port 110 is not in the power supply state, step S240 is executed.

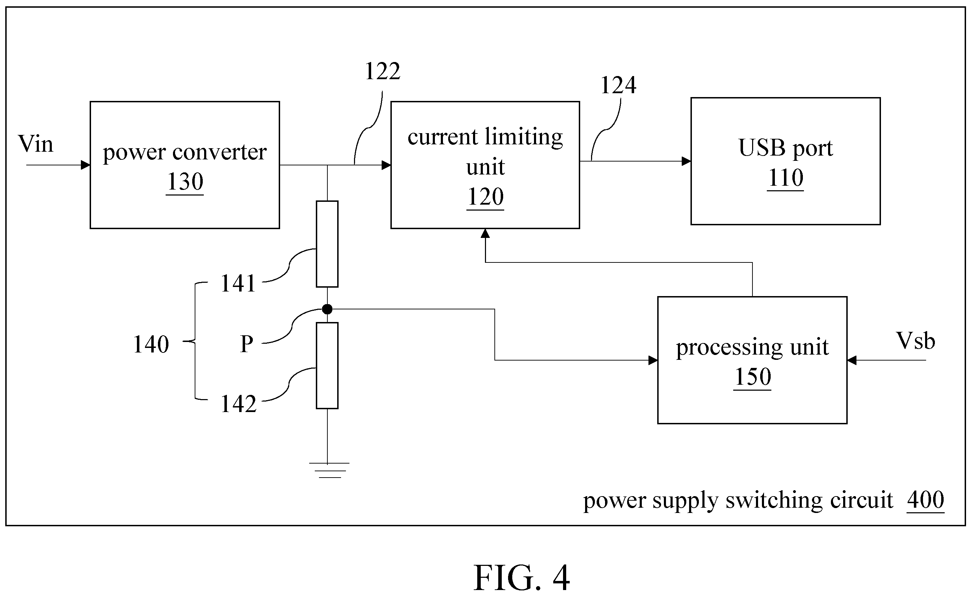

Please refer to FIG. 4, which is a block diagram of a power supply switching circuit according to a second embodiment of the present invention. The difference between the power supply switching circuit 400 of FIG. 4 and the power supply switching circuit 100 of FIG. 1 is that the detection circuit 140 of FIG. 4 is a voltage division circuit. One end of the voltage division circuit is connected to the input end 122 of the current limiting unit 120, and the other end of the voltage division circuit is grounded, and a voltage division node P of the voltage division circuit is connected to the processing unit 150. The processing unit 150 is configured to determine whether the USB port 110 is in the power supply state based on a voltage of the voltage division node P. The detection signal output by the detection circuit 140 is the voltage of the voltage division node P. The voltage division circuit may comprise a first resistor 141 and a second resistor 142. One end of the first resistor 141 is connected to the input end 122 of the current limiting unit 120, the other end of the first resistor 141 is connected to one end of the second resistor 142, the other end of the second resistor 142 is grounded, the connection point between the first resistor 141 and the second resistor 142 is the voltage division node P, and the voltage division node P is connected to a pin of the processing unit 150.

The voltage of the voltage division node P changes synchronously with the voltage of the input end 122 of the current limiting unit 120 (that is, the voltage of the voltage division node P corresponds to the electrical characteristic of the input end 122 of the current limiting unit 120). In this embodiment, the detection circuit 140 can provide the voltage of the voltage division node P to the processing unit 150. When an external electronic device is charged via the USB port 110 (the working voltage provided to the USB port 110 is drawn), the detection circuit 140 can provide a voltage with a voltage drop produced at the voltage division node P to the processing unit 150. Therefore, after the expiration of the first preset time, the processing unit 150 determines whether the USB port 110 is in the power supply state based on whether a voltage drop occurs at the voltage division node P (that is, the processing unit 150 determines whether the USB port 110 is supplying power to an external electronic device). When the processing unit 150 determines that the USB port 110 is not in the power supply state, it controls the current limiting unit 120 to be opened, thereby stopping power supply through the USB port 110.

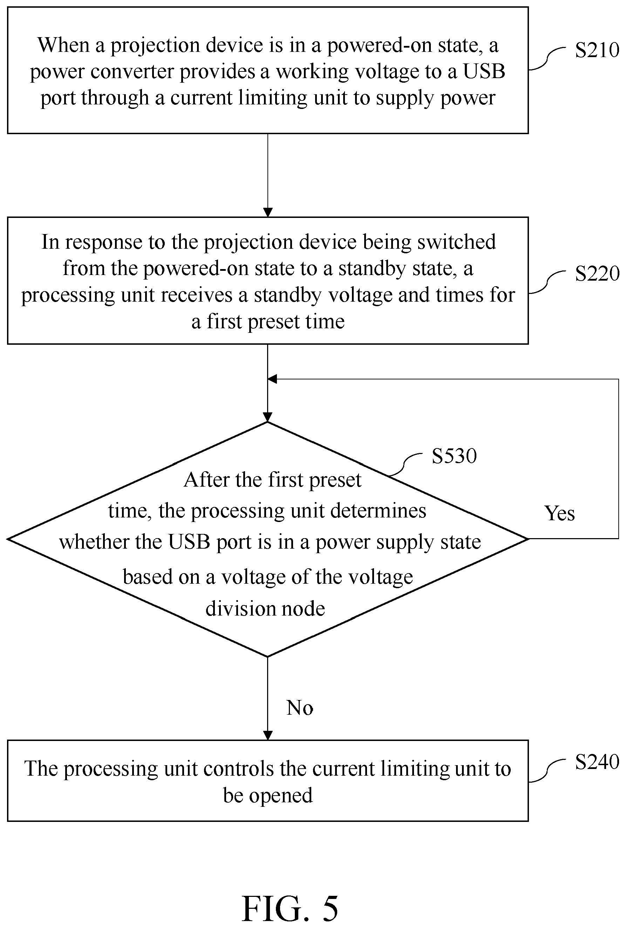

Please refer to FIG. 4 and FIG. 5 together. FIG. 5 is a flowchart of a power supply switching method according to a third embodiment of the present invention. The power supply switching method of FIG. 5 can be applied to the power supply switching circuit 400 of FIG. 4. The difference between the power supply switching method of FIG. 5 and the power supply switching method of FIG. 2 is that the power supply switching method of FIG. 5 replaces step S230 of FIG. 2 with step S530. In step S530, after the first preset time, the processing unit 150 determines whether the USB port 110 is in a power supply state based on a voltage of the voltage division node P. In one embodiment, if the processing unit 150 determines that the USB port 110 is in the power supply state, step S530 is repeatedly executed. The implementation details of step S530 can be found in the embodiment of FIG. 4 and will not be repeated here.

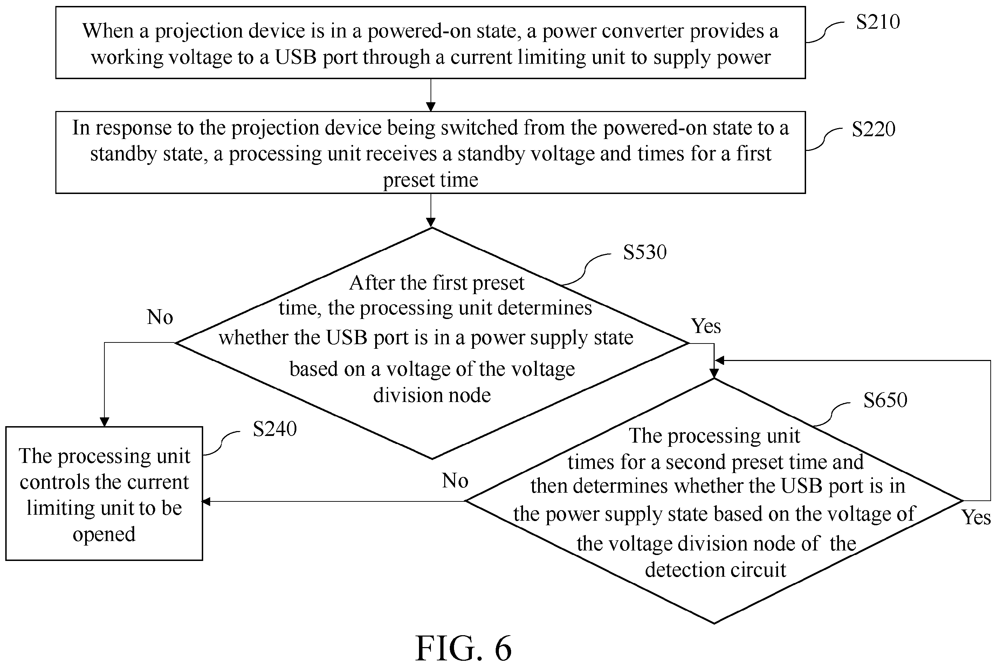

Please refer to FIG. 4 and FIG. 6 together. FIG. 6 is a flowchart of a power supply switching method according to a fourth embodiment of the present invention. The power supply switching method of FIG. 6 can be applied to the power supply switching circuit 400 of FIG. 4. The difference between the power supply switching method of FIG. 6 and the power supply switching method of FIG. 5 is that, in addition to step S210, step S220, step S530, and step S240, the power supply switching method of FIG. 6 may further comprise: in response to determining that the USB port 110 is in the power supply state, timing for a second preset time by the processing unit 150, and then determining whether the USB port 110 is in the power supply state based on the voltage of the voltage division node P of the detection circuit 140 (step S650). The first preset time may be the same as or different from the second preset time, and both may be set according to actual needs. Specifically, when the processing unit 150 determines that the USB port 110 is in the power supply state after the expiration of the first preset time, the processing unit 150 times for the second preset time. After the expiration of the second preset time, the processing unit 150 again determines whether the USB port 110 is in the power supply state based on whether a voltage drop occurs at the voltage division node P (that is, the processing unit 150 determines whether the USB port 110 is supplying power to an external electronic device). If the processing unit 150 determines that the USB port 110 is in the power supply state, step S650 is repeatedly executed. If the processing unit 150 determines that the USB port 110 is not in the power supply state, step S240 is executed.

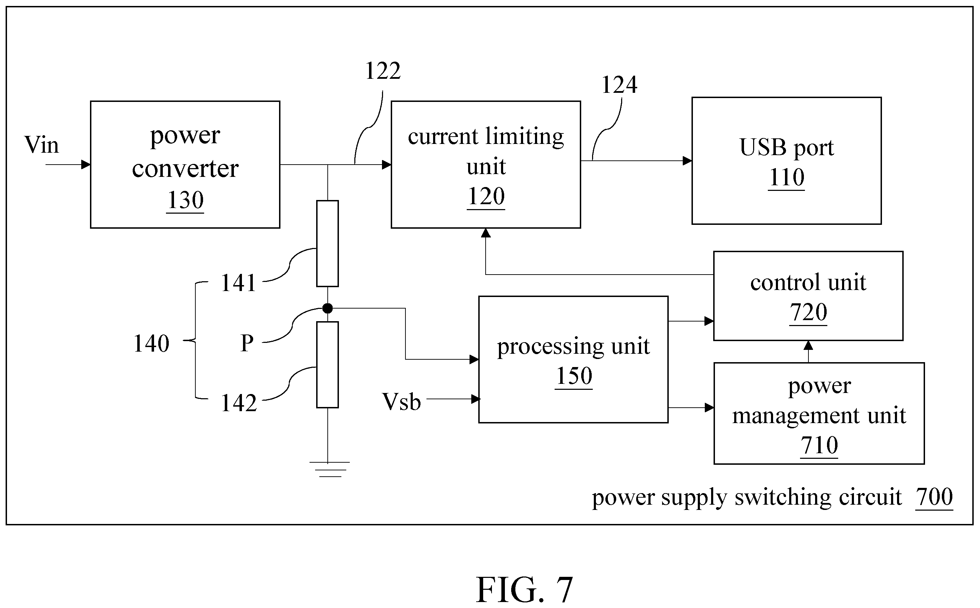

Please refer to FIG. 7, which is a block diagram of a power supply switching circuit according to a third embodiment of the present invention. The difference between the power supply switching circuit 700 of FIG. 7 and the power supply switching circuit 400 of FIG. 4 is that the power supply switching circuit 700 further comprises a power management unit 710 and a control unit 720. The power management unit 710 is connected to the processing unit 150, and the control unit 720 is connected to the processing unit 150, the power management unit 710, and the current limiting unit 120. In response to the USB port 110 not being in the power supply state, the processing unit 150 is configured to enable the power management unit 710 to supply power to the control unit 720 and to control the current limiting unit 120 to be opened through the control unit 720.

It should be noted that when the operation state of the projection device is in the standby state, the power supply (not shown) of the projection device only provides the standby voltage Vsb to the processing unit 150, so that the processing unit 150 can maintain operation, while the power management unit 710 and the control unit 720 cannot operate because they do not receive power (that is, the power management unit 710 and the control unit 720 are in a dormant state). Therefore, when the user controls the projection device by pressing the power button of the projection device or operating the remote control of the projection device to switch the projection device from the powered-on state to the standby state, the processing unit 150 can time for the first preset time, and the power converter 130 can provide a working voltage to the USB port 110 through the current limiting unit 120 to supply power. After the expiration of the first preset time, the processing unit 150 determines whether the USB port 110 is in a power supply state based on whether a voltage drop occurs at the voltage division node P (that is, determining whether the USB port 110 is supplying power to an external electronic device). Next, when the processing unit 150 determines that the USB port 110 is not in the power supply state, it enables the power management unit 710 by setting the general-purpose input/output (GPIO), so that the power management unit 710 provides the system voltage to the control unit 720 and wakes up the control unit 720. Next, the processing unit 150 notifies the control unit 720 to change the power mode setting through a transmission interface (e.g., an inter-integrated circuit (I2C) interface), so that the control unit 720 sends a disable signal to the current limiting unit 120 to control the current limiting unit 120 to be opened, thereby stopping the power converter 130 from providing the working voltage to the USB port 110 through the current limiting unit 120. Then, the power management unit 710 and the control unit 720 return to the dormant state because the operation state of the projection device is still in the standby state. The power management unit 710 may be, for example, a power management integrated circuit (power management IC). The control unit 720 may be, for example, a DDP (distributed data parallel) processing circuit.

In this way, while the projection device using the power supply switching circuit 700 is in a standby state, the power supply switching circuit 700 can control whether to continue supporting the power supply function via the USB port 110 according to usage conditions (that is, whether the USB port 110 is in the power supply state), so as to adjust (reduce) the overall power consumption of the projection device when it is in the standby state, thereby achieving energy-saving effects.

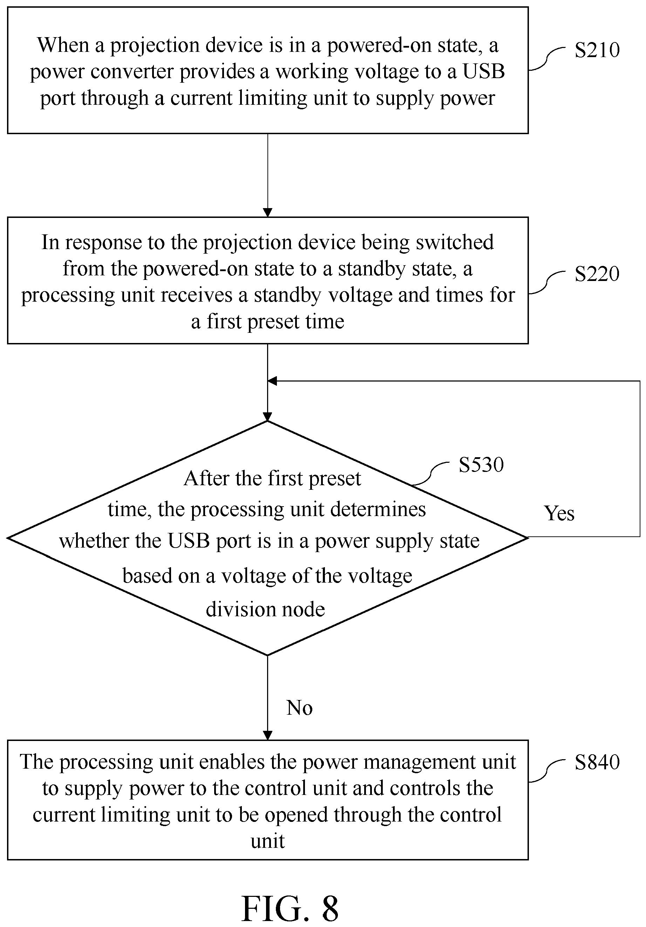

Please refer to FIG. 7 and FIG. 8 together. FIG. 8 is a flowchart of a power supply switching method according to a fifth embodiment of the present invention. The power supply switching method of FIG. 8 can be applied to the power supply switching circuit 700 of FIG. 7. The difference between the power supply switching method of FIG. 8 and the power supply switching method of FIG. 5 is that the power supply switching method of FIG. 8 replaces step S240 of FIG. 5 with step S840. In step S840, in response to determining that the USB port 110 is not in the power supply state, the processing unit 150 enables the power management unit 710 to supply power to the control unit 720 and controls the current limiting unit 120 to be opened through the control unit 720. In one embodiment, if the processing unit 150 determines that the USB port 110 is in the power supply state, step S530 is repeatedly executed. The implementation details of step S840 can be found in the embodiment of FIG. 7 and will not be repeated here.

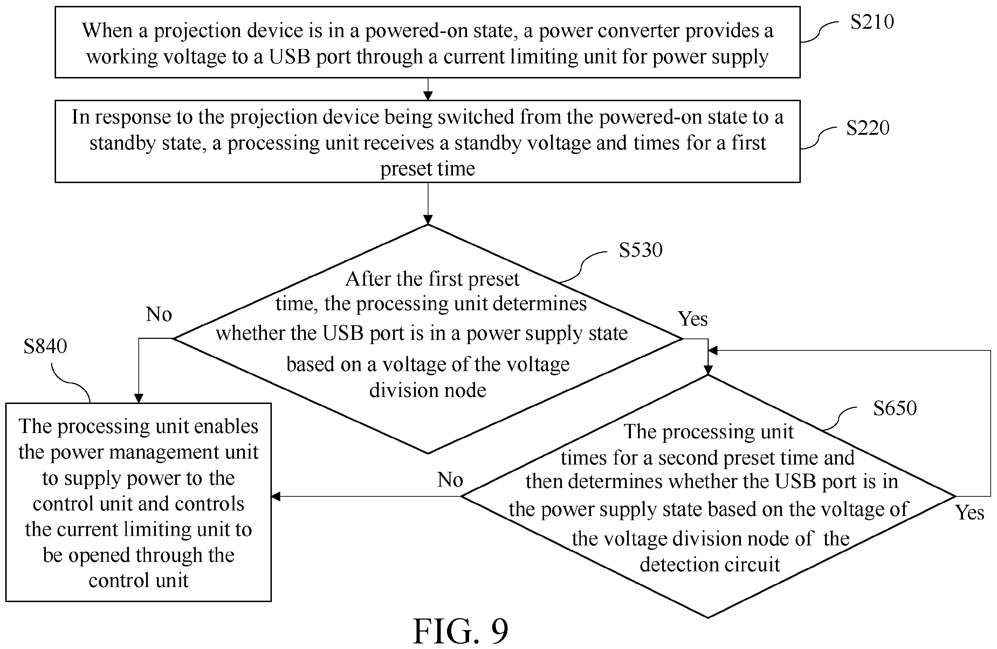

Please refer to FIG. 7 and FIG. 9 together. FIG. 9 is a flowchart of a power supply switching method according to a sixth embodiment of the present invention. The power supply switching method of FIG. 9 can be applied to the power supply switching circuit 700 of FIG. 7. The difference between the power supply switching method of FIG. 9 and the power supply switching method of FIG. 8 is that, in addition to step S210, step S220, step S530, and step S840, the power supply switching method of FIG. 9 may further comprise: in response to determining that the USB port 110 is in the power supply state, timing for a second preset time by the processing unit 150, and then determining whether the USB port 110 is in the power supply state based on a voltage of a voltage division node P of the detection circuit 140 (step S650). The implementation details of step S650 can be found in the embodiment of FIG. 6 and will not be repeated here.

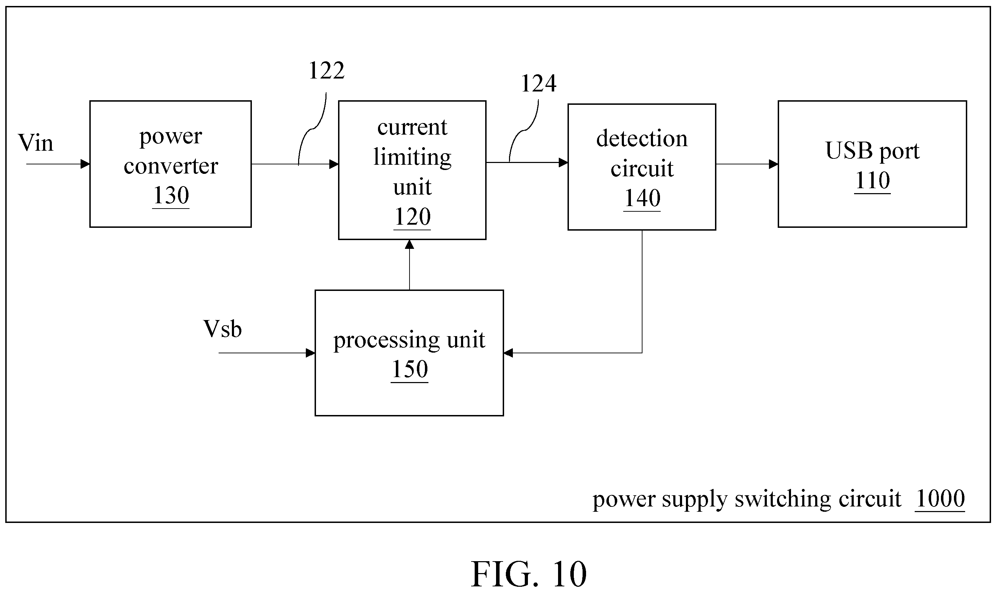

Please refer to FIG. 10, which is a block diagram of a power supply switching circuit according to a fourth embodiment of the present invention. The difference between the power supply switching circuit 1000 of FIG. 10 and the power supply switching circuit 100 of FIG. 1 is that the detection circuit 140 of FIG. 10 is connected to the output end 124 of the current limiting unit 120, and the output end 124 of the current limiting unit 120 is indirectly connected to the USB port 110 (that is, the detection circuit 140 is disposed between the current limiting unit 120 and the USB port 110). The electrical characteristic comprises a current, and the detection circuit 140 outputs a detection signal according to the electrical characteristic of the output end 124 of the current limiting unit 120.

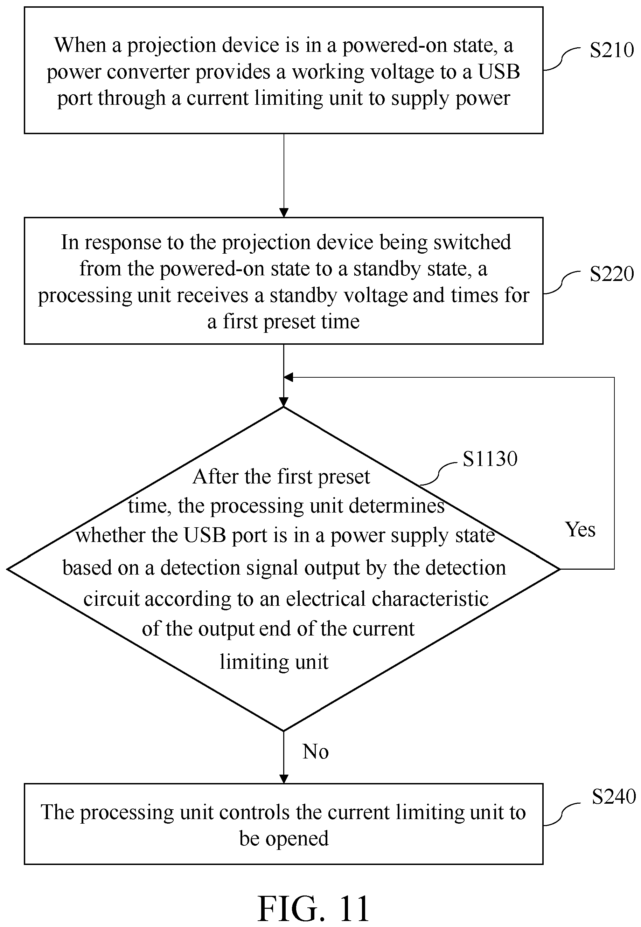

Please refer to FIG. 10 and FIG. 11 together. FIG. 11 is a flowchart of a power supply switching method according to a seventh embodiment of the present invention. The power supply switching method of FIG. 11 can be applied to the power supply switching circuit 1000 of FIG. 10. The difference between the power supply switching method of FIG. 11 and the power supply switching method of FIG. 2 is that the power supply switching method of FIG. 11 replaces step S230 of FIG. 2 with step S1130. In step S1130, after the first preset time, the processing unit 150 determines whether the USB port 110 is in a power supply state based on a detection signal output by the detection circuit 140 according to an electrical characteristic of the output end 124 of the current limiting unit 120. In one embodiment, if the processing unit 150 determines that the USB port 110 is in the power supply state, step S1130 is repeatedly executed. The implementation details of step S1130 are similar to the implementation details of step S230 and will not be repeated here.

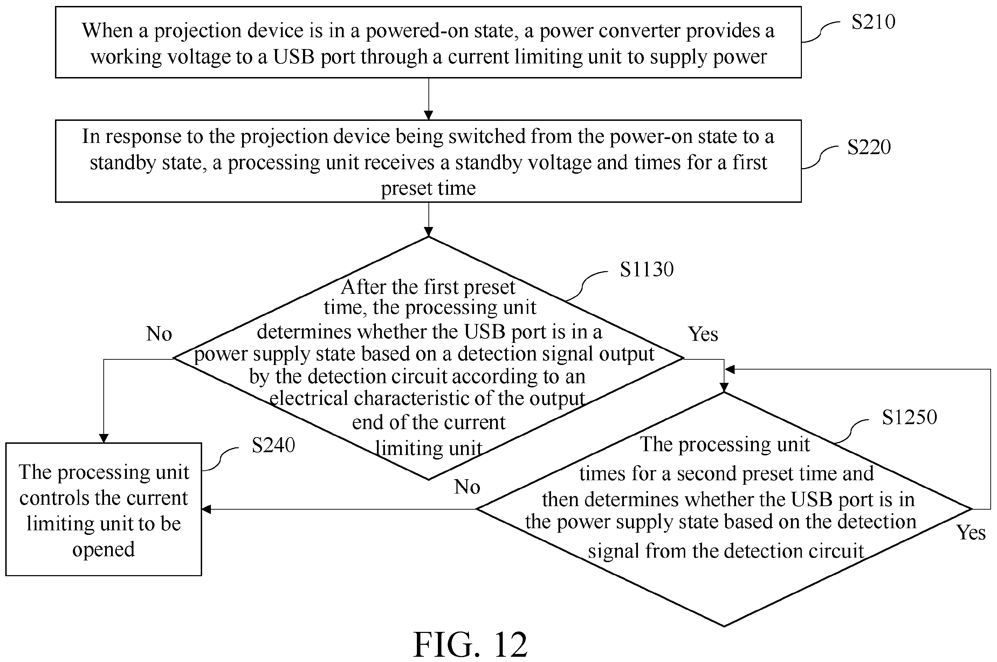

Please refer to FIG. 10 and FIG. 12 together. FIG. 12 is a flowchart of a power supply switching method according to an eighth embodiment of the present invention. The power supply switching method of FIG. 12 can be applied to the power supply switching circuit 1000 of FIG. 10. The difference between the power supply switching method of FIG. 12 and the power supply switching method of FIG. 11 is that the power supply switching method of FIG. 12 further comprises: in response to determining that the USB port 110 is in the power supply state, timing for a second preset time by the processing unit 150, and then determining whether the USB port 110 is in the power supply state based on the detection signal from the detection circuit 140 (step S1250). The first preset time may be the same as or different from the second preset time, and both may be set according to actual needs. Specifically, when the processing unit 150 determines that the USB port 110 is in the power supply state after the expiration of the first preset time, the processing unit 150 times for the second preset time. After the expiration of the second preset time, the processing unit 150 again determines whether the USB port 110 is in the power supply state based on whether a voltage drop occurs at the output end 124 of the current limiting unit 120 (that is, whether the USB port 110 is supplying power to an external electronic device). If the processing unit 150 determines that the USB port 110 is in the power supply state, step S1250 is repeatedly executed. If the processing unit 150 determines that the USB port 110 is not in the power supply state, step S240 is executed.

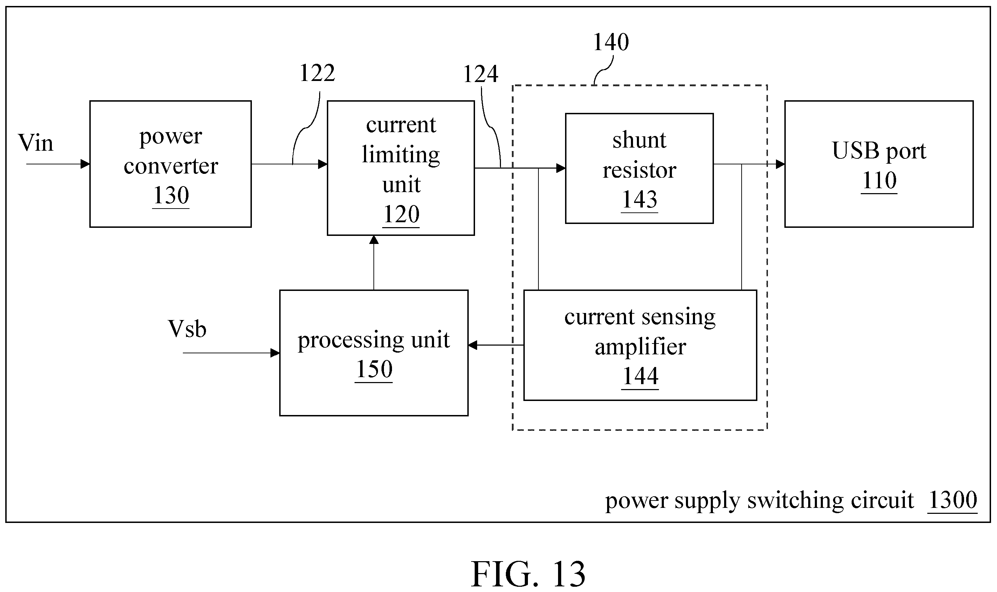

Please refer to FIG. 13, which is a block diagram of a power supply switching circuit according to a fifth embodiment of the present invention. The difference between the power supply switching circuit 1300 of FIG. 13 and the power supply switching circuit 1000 of FIG. 10 is that the detection circuit 140 of FIG. 13 comprises a shunt resistor 143 and a current sensing amplifier 144. One end of the shunt resistor 143 is connected to the output end 124 of the current limiting unit 120, and the other end of the shunt resistor 143 is connected to the USB port 110. The current sensing amplifier 144 is connected in parallel with the shunt resistor 143. The current sensing amplifier 144 is configured to output a sensing voltage signal to the processing unit 150 based on a current flowing through the shunt resistor 143, so that the processing unit 150 determines whether the USB port 110 is in the power supply state based on the sensing voltage signal. The detection signal output by the detection circuit 140 is the sensing voltage signal.

The magnitude of the current flowing through the shunt resistor 143 is equal to the magnitude of the current at the output end 124 of the current limiting unit 120 (that is, the current flowing through the shunt resistor 143 corresponds to the electrical characteristic of the output end 124 of the current limiting unit 120). When an external electronic device is charged via the USB port 110, the current flowing through the shunt resistor 143 increases, and the current sensing amplifier 144 provides a sensing voltage signal corresponding to the increase in current to the processing unit 150. Therefore, after the expiration of the first preset time, the processing unit 150 determines whether the USB port 110 is in the power supply state based on the received sensing voltage signal (that is, whether the USB port 110 is supplying power to an external electronic device). When the processing unit 150 determines that the USB port 110 is not in the power supply state, it controls the current limiting unit 120 to be opened, thereby stopping the power supply through the USB port 110, and the operation state of the projection device is switched from the standby state to the energy-saving state.

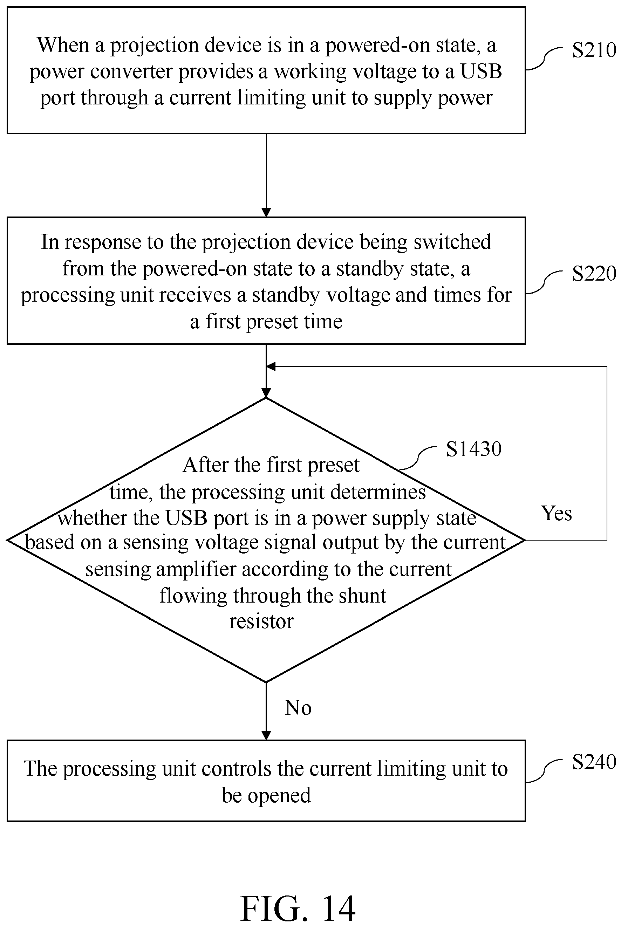

Please refer to FIG. 13 and FIG. 14 together. FIG. 14 is a flowchart of a power supply switching method according to a ninth embodiment of the present invention. The power supply switching method of FIG. 14 can be applied to the power supply switching circuit 1300 of FIG. 13. The difference between the power supply switching method of FIG. 14 and the power supply switching method of FIG. 11 is that the power supply switching method of FIG. 14 replaces step S1130 of FIG. 11 with step S1430. In step S1430, after the first preset time, the processing unit 150 determines whether the USB port 110 is in a power supply state based on a sensing voltage signal output by the current sensing amplifier 144 according to the current flowing through the shunt resistor 143. In one embodiment, if the processing unit 150 determines that the USB port 110 is in the power supply state, step S1430 is repeatedly executed. The implementation details of step S1430 can be found in the embodiment of FIG. 13 and will not be repeated here.

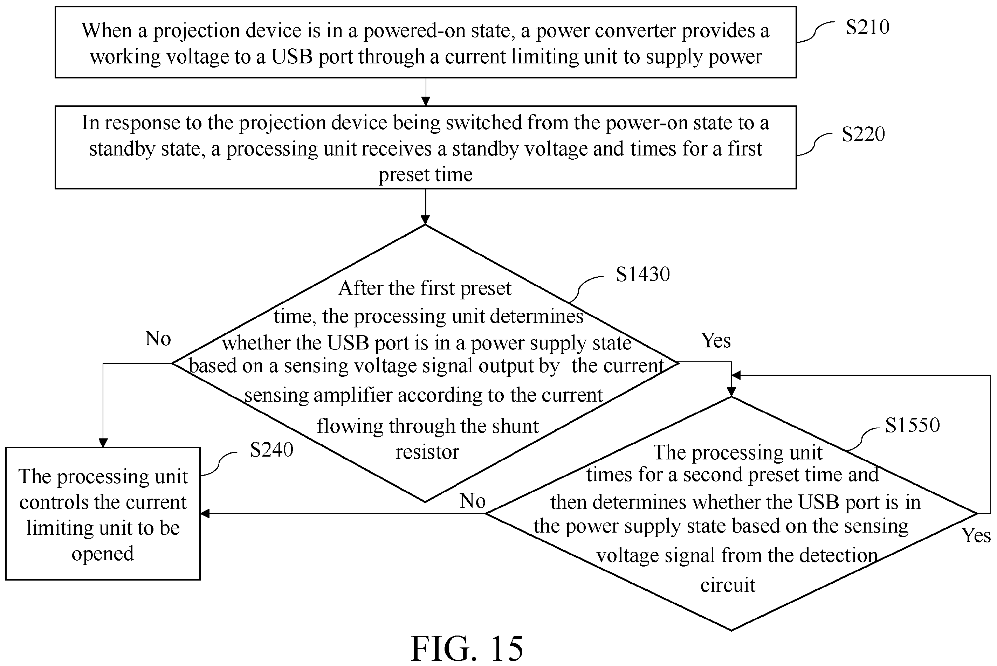

Please refer to FIG. 13 and FIG. 15 together. FIG. 15 is a flowchart of a power supply switching method according to a tenth embodiment of the present invention. The power supply switching method of FIG. 15 can be applied to the power supply switching circuit 1300 of FIG. 13. The difference between the power supply switching method of FIG. 15 and the power supply switching method of FIG. 14 is that, in addition to step S210, step S220, step S1430, and step S240, the power supply switching method of FIG. 15 may further comprise: in response to determining that the USB port 110 is in the power supply state, timing for a second preset time by the processing unit 150, and then determining whether the USB port 110 is in the power supply state based on the sensing voltage signal from the detection circuit 140 (step S1550). The first preset time may be the same as or different from the second preset time, and both may be set according to actual needs. Specifically, when the processing unit 150 determines that the USB port 110 is in the power supply state after the expiration of the first preset time, it times for the second preset time. After the expiration of the second preset time, the processing unit 150 again determines whether the USB port 110 is in the power supply state based on the sensing voltage signal (that is, whether the USB port 110 is supplying power to an external electronic device). If the processing unit 150 determines that the USB port 110 is in the power supply state, step S1550 is repeatedly executed. If the processing unit 150 determines that the USB port 110 is not in the power supply state, step S240 is executed.

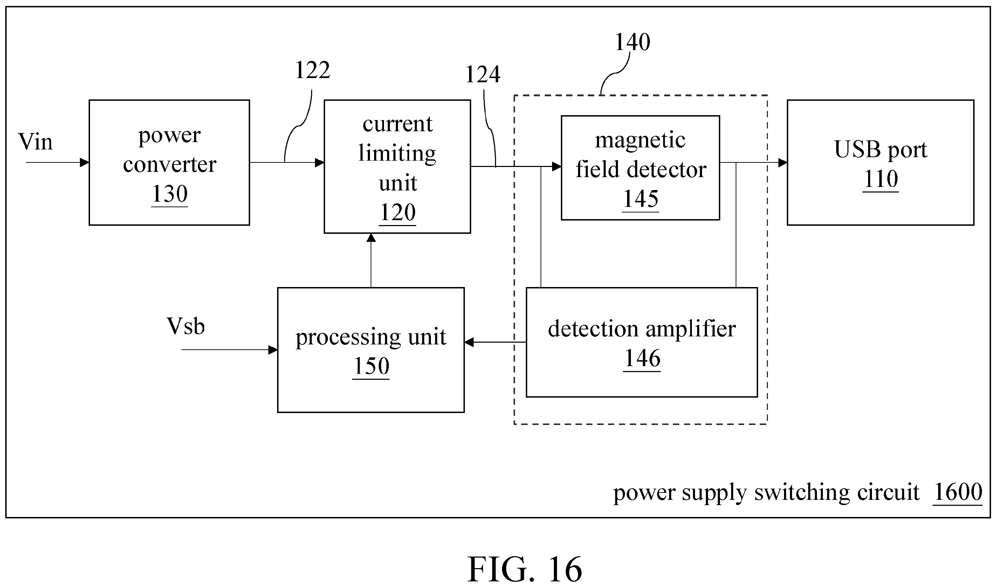

Please refer to FIG. 16, which is a block diagram of a power supply switching circuit according to a sixth embodiment of the present invention. The difference between the power supply switching circuit 1600 of FIG. 16 and the power supply switching circuit 1000 of FIG. 10 is that the detection circuit 140 of FIG. 16 comprises a magnetic field detector 145 and a detection amplifier 146. One end of the magnetic field detector 145 is connected to the output end 124 of the current limiting unit 120, and the other end of the magnetic field detector 145 is connected to the USB port 110 (that is, the magnetic field detector 145 is connected between the output end 124 of the current limiting unit 120 and the USB port 110), and the magnetic field detector 145 is used to measure a magnetic field. The detection amplifier 146 is connected in parallel with the magnetic field detector 145 and outputs a measurement voltage signal to the processing unit 150 based on the measurement result of the magnetic field detector 145, so that the processing unit 150 determines whether the USB port 110 is in the power supply state based on the measurement voltage signal. The detection signal output by the detection circuit 140 is the measurement voltage signal. The magnetic field detector 145 is, for example, an iron core or a Hall element. When the magnetic field detector 145 is an iron core, the current flowing through the iron core generates a magnetic field, and the detection amplifier 146 is a current sensing amplifier and outputs a measurement voltage signal to the processing unit 150 based on the current flowing through the iron core (that is, the measurement result of the magnetic field detector 145). When the magnetic field detector 145 is a Hall element, the Hall element converts the magnetic field generated by the current flowing through the Hall element into a Hall voltage based on the Hall effect, and the detection amplifier 146 is a voltage sensing amplifier and outputs a measurement voltage signal to the processing unit 150 based on the Hall voltage.

The magnitude of the current flowing through the magnetic field detector 145 is equal to the magnitude of the current at the output end 124 of the current limiting unit 120 (that is, the current flowing through the magnetic field detector 145 corresponds to the electrical characteristic of the output end 124 of the current limiting unit 120). When an external electronic device is charged via the USB port 110, the current flowing through the magnetic field detector 145 increases, and the detection amplifier 146 provides a measurement voltage signal corresponding to the increase in current to the processing unit 150. Therefore, after the expiration of the first preset time, the processing unit 150 determines whether the USB port 110 is in the power supply state based on the received measurement voltage signal (that is, whether the USB port 110 is supplying power to an external electronic device). When the processing unit 150 determines that the USB port 110 is not in the power supply state, it controls the current limiting unit 120 to be opened, thereby stopping the power supply through the USB port 110, and the operation state of the projection device is switched from the standby state to an energy-saving state.

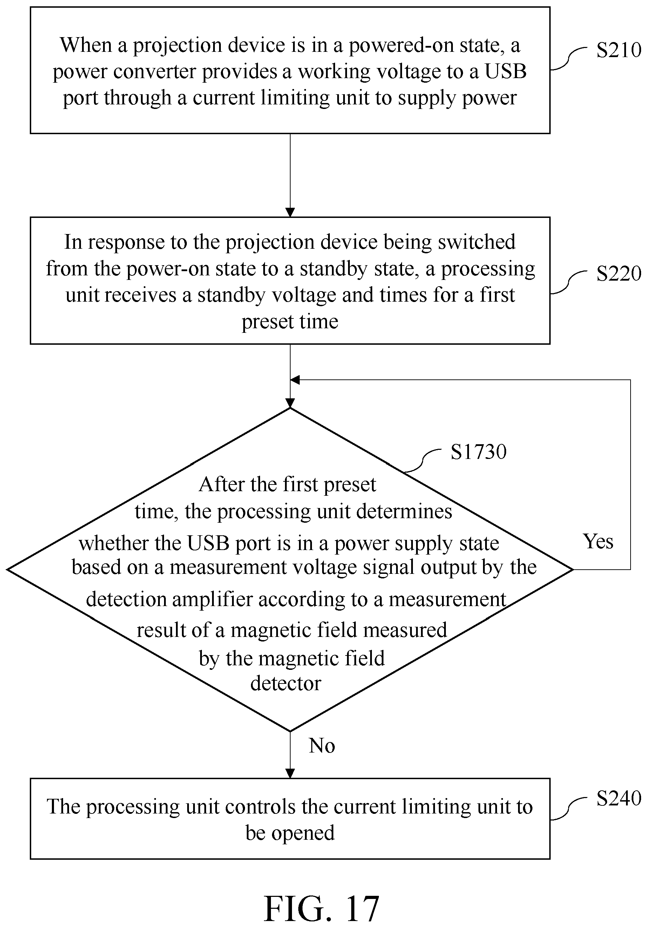

Please refer to FIG. 16 and FIG. 17 together. FIG. 17 is a flowchart of a power supply switching method according to an eleventh embodiment of the present invention. The power supply switching method of FIG. 17 can be applied to the power supply switching circuit 1600 of FIG. 16. The difference between the power supply switching method of FIG. 17 and the power supply switching method of FIG. 11 is that the power supply switching method of FIG. 17 replaces step S1130 of FIG. 11 with step S1730. In step S1730, after the first preset time, the processing unit 150 determines whether the USB port 110 is in a power supply state based on a measurement voltage signal output by the detection amplifier 146 according to a measurement result of a magnetic field measured by the magnetic field detector 145. In one embodiment, if the processing unit 150 determines that the USB port 110 is in the power supply state, step S1730 is repeatedly executed. The implementation details of step S1730 can be found in the embodiment of FIG. 16 and will not be repeated here.

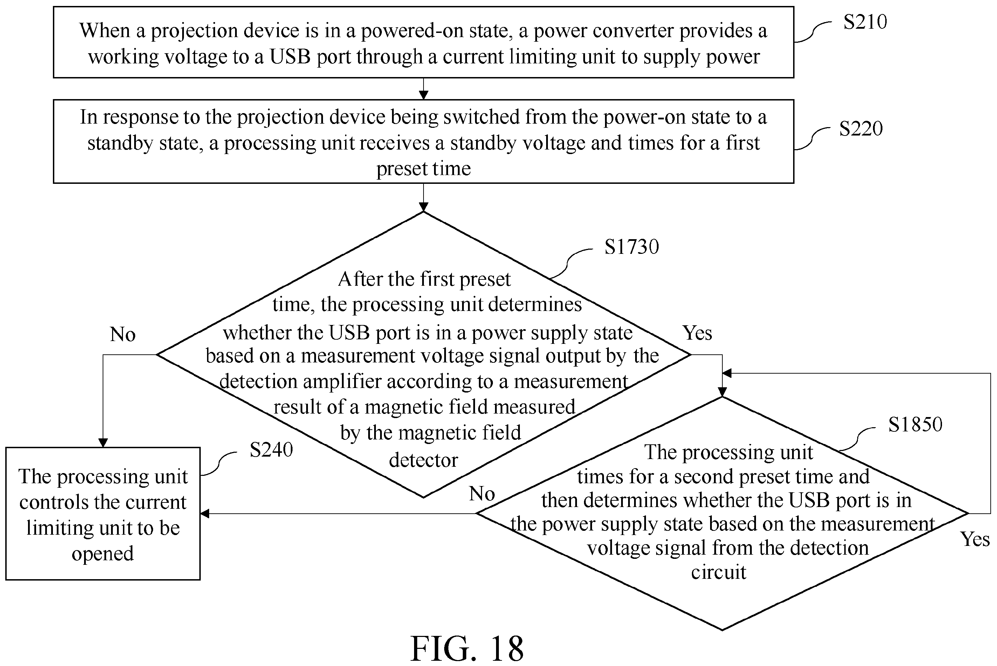

Please refer to FIG. 16 and FIG. 18 together. FIG. 18 is a flowchart of a power supply switching method according to a twelfth embodiment of the present invention. The power supply switching method of FIG. 18 can be applied to the power supply switching circuit 1600 of FIG. 16. The difference between the power supply switching method of FIG. 18 and the power supply switching method of FIG. 17 is that, in addition to step S210, step S220, step S1730, and step S240, the power supply switching method of FIG. 18 may further comprise: in response to determining that the USB port 110 is in the power supply state, timing for a second preset time by the processing unit 150, and then determining whether the USB port 110 is in the power supply state based on the measurement voltage signal from the detection circuit 140 (step S1850). The first preset time may be the same as or different from the second preset time, and both may be set according to actual needs. Specifically, when the processing unit 150 determines that the USB port 110 is in the power supply state after the expiration of the first preset time, it times for the second preset time. After the expiration of the second preset time, the processing unit 150 again determines whether the USB port 110 is in the power supply state based on the measurement voltage signal (that is, whether the USB port 110 is supplying power to an external electronic device). If the processing unit 150 determines that the USB port 110 is in the power supply state, step S1850 is repeatedly executed. If the processing unit 150 determines that the USB port 110 is not in the power supply state, step S240 is executed.

Based on the above, the power supply switching circuit and power supply switching method according to the embodiments of the present invention have at least one of the following advantages. In the power supply switching circuit and power supply switching method of the present invention, when the operation state of the projection device is in the standby state and after the first preset time has elapsed, the processing unit determines whether the USB port is in the power supply state based on the detection signal output by the detection circuit; and when the USB port is not in the power supply state, the processing unit controls the current limiting unit to be opened, thereby stopping the power supply through the USB port and switching the operation state of the projection device from the standby state to an energy-saving state. Therefore, the power supply switching circuit and the power supply switching method of the present invention can control whether the projection device supports the power supply function via the USB port when the projection device is in the standby state, enabling the projection device using the power supply switching circuit and the power supply switching method to control whether to continue supporting the power supply function according to usage conditions while in the standby state, thereby adjusting (reducing) the overall power consumption of the projection device during standby, achieving energy-saving effects, and enabling the projection device to comply with the standby power consumption requirements of the Energy-Related Products Directive (ErP Directive) 2023/826 published on April 17, 2023, by the European Commission.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A power supply switching circuit, disposed in a projection device, and comprising:
a universal serial bus (USB) port (110);
a current limiting unit (120), wherein an output end (124) of the current limiting unit (120) is connected to the USB port (110);
a power converter (130), connected to an input end (122) of the current limiting unit (120), and configured to provide a working voltage to the USB port (110) through the current limiting unit (120) to supply power when the projection device is in a powered-on state;
a detection circuit (140), connected to the input end (122) or the output end (124) of the current limiting unit (120), and configured to output a detection signal according to an electrical characteristic of the input end (122) or the output end (124) of the current limiting unit (120); and
a processing unit (150), connected to the detection circuit (140) and the current limiting unit (120),
wherein the processing unit (150) is configured to receive a standby voltage (Vsb) after the projection device is switched from the powered-on state to a standby state, determine whether the USB port (110) is in a power supply state based on the detection signal after the processing unit (150) receives the standby voltage and times for a first preset time, and control the current limiting unit (120) to be opened in response to the USB port (110) not being in the power supply state.

2. The power supply switching circuit according to claim 1, wherein the electrical characteristic comprises at least one of a voltage and a current.

3. The power supply switching circuit according to claim 1 or 2, wherein the processing unit (150) further determines whether the USB port (110) is in the power supply state based on the detection signal output by the detection circuit (140) again after the processing unit (150) determines that the USB port (110) is in the power supply state and times for a second preset time, preferably the first preset time is the same as or different from the second preset time.

4. The power supply switching circuit according to any one of the preceding claims, wherein the detection circuit (140) is a voltage division circuit; one end of the voltage division circuit (140) is connected to the input end (122) of the current limiting unit (120), the other end of the voltage division circuit (140) is grounded, and a voltage division node (P) of the voltage division circuit (140) is connected to the processing unit (!50); the processing unit (150) is configured to determine whether the USB port (110) is in the power supply state based on a voltage of the voltage division node (P), wherein the detection signal is the voltage of the voltage division node (P).

5. The power supply switching circuit according to claim 4, further comprising a power management unit (710) and a control unit (720),
wherein the power management unit (710) is connected to the processing unit (150), the control unit (720) is connected to the processing unit (150), the power management unit (/10) and the current limiting unit (120);
in response to the USB port (110) not being in the power supply state, the processing unit (150) is configured to enable the power management unit (710) to supply power to the control unit (720), and control the current limiting unit (122) to be opened through the control unit (720).

6. The power supply switching circuit according to any one of the preceding claims 1-3, wherein the detection circuit (140) comprises a shunt resistor (143) and a current sensing amplifier (144);
one end of the shunt resistor (143) is connected to the output end (124) of the current limiting unit (120), and the other end of the shunt resistor (143) is connected to the USB port (110), and the current sensing amplifier (144) is connected in parallel with the shunt resistor (143);
the current sensing amplifier (144) is configured to output a sensing voltage signal to the processing unit (150) based on a current flowing through the shunt resistor (143), so that the processing unit (150) determines whether the USB port (110) is in the power supply state based on the sensing voltage signal, wherein the detection signal is the sensing voltage signal.

7. The power supply switching circuit according to any one of the preceding claims 1-3, wherein the detection circuit (140) comprises a magnetic field detector (145) and a detection amplifier (146); the magnetic field detector (145) is connected to the output end (124) of the current limiting unit (120) and the USB port (110), and configured to measure a magnetic field;
the detection amplifier (146) is connected in parallel with the magnetic field detector (145), and configured to output a measurement voltage signal to the processing unit (150) based on a measurement result of the magnetic field detector (145), so that the processing unit (150) determines whether the USB port (110) is in the power supply state based on the measurement voltage signal, wherein the detection signal is the measurement voltage signal.

8. The power supply switching circuit according to claim 7, wherein the magnetic field detector (145) is an iron core or a Hall element.

9. Projection device comprising a power supply switching circuit (100) as claimed in any one of the preceding claims.

10. A power supply switching method applied to a power supply switching circuit (100) of a projection device, the power supply switching circuit (100) comprising a universal serial bus (USB) port (110), a current limiting unit (120), a power converter (130), a detection circuit (140) and a processing unit (150), an input end (122) of the current limiting unit (120) being connected to the power converter (130), an output end (124) of the current limiting unit (120) being connected to the USB port (110), the detection circuit (140) being connected to the input end (122) or the output end (124) of the current limiting unit (120), the processing unit (150) being connected to the detection circuit (140) and the current limiting unit (120), and the power supply switching method comprising the following steps:
providing (S210) a working voltage to the USB port (110) through the current limiting unit (120) to supply power when the projection device is in a powered-on state by the power converter;
in response to the projection device being switched from the powered-on state to a standby state, receiving (S220) a standby voltage (Vsb) and timing for a first preset time by the processing unit (150);
after the first preset time, determining (S230) whether the USB port (110) is in a power supply state based on a detection signal output by the detection circuit (140) according to an electrical characteristic of the output end (124) or the input end (122) of the current limiting unit (120) by the processing unit (150); and
in response to determining the USB port (110) is not in the power supply state, controlling (S240) the current limiting unit (120) to be opened by the processing unit (150).

11. The power supply switching method according to claim 10, further comprising the following step:
in response to determining that the USB port (110) is in the power supply state, determining whether the USB port (110) is in the power supply state based on the detection signal output by the detection circuit (140) after timing a second preset time by the processing unit (150).

12. The power supply switching method according to claim 10 or 11, wherein the detection circuit (140) is a voltage division circuit, one end of the voltage division circuit (140) is connected to the input end (122) of the current limiting unit (120), and the other end of the voltage division circuit (140) is grounded, and a voltage division node (P) of the voltage division circuit (140) is connected to the processing unit (150); the step of after the first preset time, determining, whether the USB port is in the power supply state based on the detection signal output by the detection circuit (140) according to the electrical characteristic of the output end (124) or the input end (122) of the current limiting unit (120) by the processing unit (150) comprises:
after the first preset time, determining whether the USB port (110) is in the power supply state based on a voltage of the voltage division node (P) by the processing unit (150), wherein the detection signal is the voltage of the voltage division node (P).

13. The power supply switching method according to claim 12, wherein the power supply switching circuit (100) further comprises a power management unit (710) and a control unit (720), the power management unit (710) is connected to the processing unit (150), and the control unit (720) is connected to the processing unit (150), the power management unit (710) , and the current limiting unit (120);
wherein the step of in response to determining that the USB port (110) is not in the power supply state, controlling the current limiting unit (120) to be opened by the processing unit (150) comprises:
in response to determining that the USB port (110) is not in the power supply state, enabling the power management unit (710) to supply power to the control unit (720), and controlling the current limiting unit (120) to be opened through the control unit (720) by the processing unit (150).

14. The power supply switching method according to claim 10 or 11, wherein the detection circuit (140) comprises a shunt resistor (143) and a current sensing amplifier (144), one end of the shunt resistor (143) is connected to the output end (124) of the current limiting unit (120), the other end of the shunt resistor (143) is connected to the USB port (110), and the current sensing amplifier (144) is connected in parallel with the shunt resistor (143); the step of after the first preset time, determining whether the USB port (110) is in the power supply state based on the detection signal output by the detection circuit (140) according to the electrical characteristic of the output end (124) or the input end (122) of the current limiting unit (120) by the processing unit (150) comprises:
after the first preset time, determining whether the USB port (110) is in the power supply state based on a sensing voltage signal output by the current sensing amplifier (144) according to a current flowing through the shunt resistor (143) by the processing unit (150), wherein the detection signal is the sensing voltage signal.

15. The power supply switching method according to claim 10 or 11, wherein the detection circuit (140) comprises a magnetic field detector (145) and a detection amplifier (1465), the magnetic field detector (145) is connected to the output end (124) of the current limiting unit (120) and the USB port (110), and the detection amplifier (146) is connected in parallel with the magnetic field detector (145); the step of after the first preset time, determining whether the USB port (110) is in the power supply state based on the detection signal output by the detection circuit (140) according to the electrical characteristic of the output end (124) or the input end (122) of the current limiting unit (120) by the processing unit (150) comprises:
after the first preset time, determining whether the USB port (110) is in the power supply state based on a measurement voltage signal output by the detection amplifier (140) corresponding to a measurement result of a magnetic field measured by the magnetic field detector (145), by the processing unit (150), wherein the detection signal is the measurement voltage signal.
